# FASCICULE DE BREVET EUROPEEN

(11) **EP 2 030 449 B1**
(45) Date de publication et mention de la délivrance du brevet: **06.09.2017**
(21) Numéro de dépôt: 07729676.2
(22) Date de dépôt: 30.05.2007
(51) Int. Cl.: H04N 21/234, H04N 21/236, H04N 21/242

(54) **PROCEDE D'INSERTION D'AU MOINS UNE COMPOSANTE DANS UN FLUX NUMERIQUE, DISPOSITIF D'INSERTION ET PRODUIT PROGRAMME D'ORDINATEUR CORRESPONDANTS**
VERFAHREN ZUM EINFÜGEN MINDESTENS EINER KOMPONENTE IN EINEN DIGITALEN STROM, ENTSPRECHENDE EINFÜGEEINRICHTUNG UND COMPUTERPROGRAMMPRODUKT
METHOD OF INSERTING AT LEAST ONE COMPONENT INTO A DIGITAL STREAM, CORRESPONDING INSERTING DEVICE AND COMPUTER PROGRAM PRODUCT

(30) Priorité: 20.06.2006 FR 0605493
(43) Date de publication de la demande: 04.03.2009
(73) Titulaire: TDF, 75732 Paris Cedex 15 (FR)
(72) Inventeur: DUPAIN, Pascal, F-35131 Pont-Pean (FR)
(74) Mandataire: Vidon Brevets & Stratégie
(86) Numéro de dépôt international: PCT/EP2007/055263
(87) Numéro de publication internationale: WO 2007/147706

(56) Documents cités:
- EP-A1- 1 463 330
- DE-A1- 10 139 069
- US-A- 5 650 825
- US-A1- 2002 140 867
- US-A1- 2004 022 278
- US-A1- 2005 015 816
- WEISS S M: "SWITCHING FACILITIES IN MPEG-2: NECESSARY BUT NOT SUFFICIENT" SMPTE JOURNAL, SMPTE INC. SCARSDALE, N.Y, US, vol. 104, no. 12, décembre 1995 (1995-12), pages 788-802, XP000543847 ISSN: 0036-1682
- ATSC: "Synchronization Standard for Distributed Transmission, Revision A" ATSC A/110A, [Online] 19 juillet 2005 (2005-07-19), pages 1-60, XP002417915 Extrait de l'Internet: URL:http://www.atsc.org/standards/a_110a.p df>

## Description

### 1. Domaine de l'invention

Le domaine de l'invention est celui de la transmission et de la diffusion d'informations numériques.

Plus précisément, l'invention concerne l'insertion synchrone de composante(s) dans un flux numérique, dans un réseau comprenant une pluralité d'émetteurs utilisant une même fréquence d'émission.

Dans un mode de réalisation préférentiel, mais non exclusif, de l'invention, cette technique s'inscrit dans le contexte de la norme ISO/IEC 13818-1 relative aux multiplex MPEG-TS ("Motion Picture Expert Group-Transport Stream") et aux réseaux SFN ("Single Frequency Network" pour "réseau à fréquence unique").

### 2. Art antérieur

On s'attache plus particulièrement dans la suite de ce document à décrire une problématique existante dans le domaine des réseaux de diffusion de télévision numérique terrestre, à laquelle ont été confrontés les inventeurs de la présente demande de brevet. L'invention ne se limite bien sûr pas à ce domaine particulier d'application, mais présente un intérêt pour toute technique de transmission ou de diffusion d'informations devant faire face à une problématique proche ou similaire.

Des réseaux de diffusion de télévision numérique terrestre, encore appelée TNT, mettant en oeuvre la norme DVB-T ("Digital Video Broadcasting - Terrestrial" pour "diffusion vidéo numérique terrestre"), sont aujourd'hui déployés en France, en Europe, et dans plusieurs autres Etats du monde. Dans la grande majorité, ces réseaux sont de type MFN ("Multi Frequency Network" pour "réseau multi fréquences"), ce qui signifie que les différents émetteurs d'un tel réseau fonctionnent à des fréquences distinctes. A l'inverse, dans certaines zones géographiques, les réseaux sont de type SFN, ou isochrones, ce qui signifie que les différents émetteurs doivent être précisément synchronisés en temps et en fréquence.

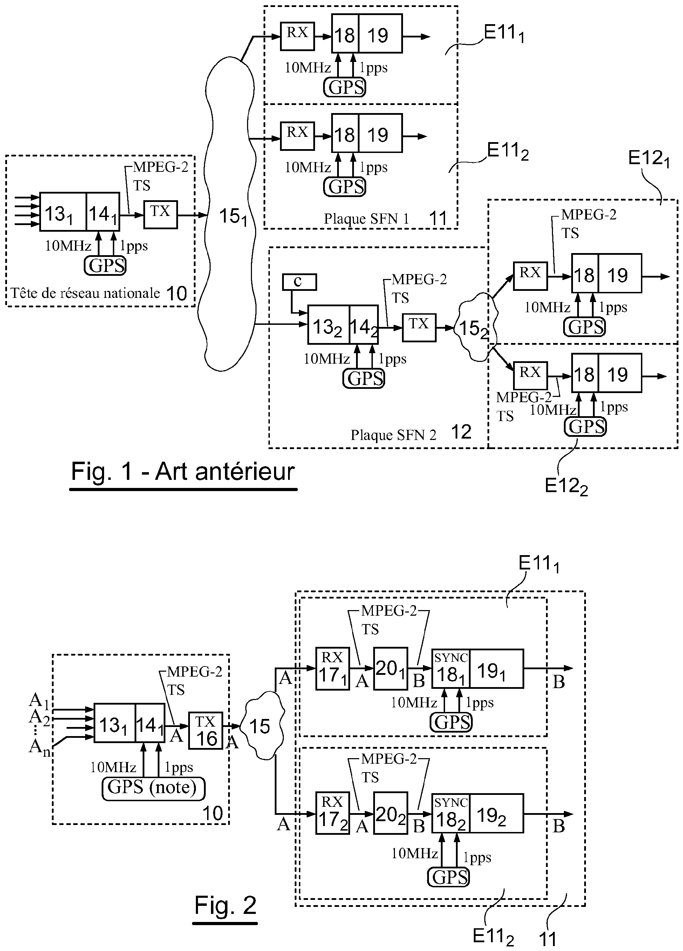

Dans un réseau SFN, tel qu'illustré par exemple par la figure 1, avec une tête de réseau nationale 10 et des plaques SFN1 11 et SFN2 12, les émetteurs E11₁, E11₂ (plaque SFN1), E12₁ et E12₂ (plaque SFN2) de chaque plaque sont synchrones aux niveaux temporel et fréquentiel, ce qui signifie qu'ils doivent émettre un même signal modulé au même instant. Par exemple, ce signal modulé peut être un signal numérique formaté selon la norme 13818-1, appelé MPEG-TS.

Cette synchronisation entre les différents émetteurs d'une plaque SFN, également appelée par généralisation réseau SFN dans la suite de la description, est assurée par l'insertion d'un marqueur de paquets de type MIP ("Megaframe Initialization Packet" pour "paquet d'initialisation de méga-trame") dans le flux MPEG-TS, grâce à un adaptateur SFN 14₁, après le multiplexage 13₁ de toutes les composantes constituant le multiplex final. Un exemple d'un tel procédé de marquage est normalisé dans la norme ETSI TS 101 191.

Les signaux ainsi marqués sont distribués vers les plaques SFN par un réseau ou noeud de distribution 15₁. Ensuite, la synchronisation des signaux du réseau SFN, en sortie des modulateurs 19 de chaque émetteur E11₁, E11₂, E12₁ et E12₂, est réalisée à partir de tables prédéterminées, dites tables MIP, par un système de synchronisation 18, permettant aux différents modulateurs 19 de réaligner les trames constituant lesdits signaux par rapport à une même référence externe unique, pouvant être n'importe quelle référence de fréquence commune disponible, par exemple de type GPS ("Global Positioning System" en anglais).

La diffusion de programmes locaux ou régionaux suppose un traitement spécifique, qui est mis en oeuvre de façon différente en fonction du type de réseau. Pour un réseau de type MFN, ceci est relativement aisé, du fait que plusieurs fréquences sont utilisées. En revanche, pour un réseau de type SFN, une telle diffusion nécessite l'insertion de données locales ou régionales, notées composantes C dans la suite de la description, en amont d'un ou plusieurs émetteurs d'une plaque SFN. Cette insertion doit être réalisée de telle sorte que la caractéristique SFN du réseau soit conservée, c'est à dire de façon que l'ensemble des signaux en sortie de chaque modulateur DVB-T de tous les émetteurs d'une même plaque soient identiques.

Avec les techniques actuelles, l'insertion de données locales ou régionales en amont d'un ou plusieurs émetteurs dans une plaque SFN nécessite une modification de l'architecture de la plaque SFN d'origine, illustrée par exemple par la plaque SFN1 11 dans la figure 1, pour pouvoir conserver un réseau SFN. Cette modification fondamentale de la plaque SFN nécessite de remultiplexer (avec un multiplexeur 13₂) le flux MPEG-TS après insertion des composantes C, puis de repasser ce flux multiplexé au travers d'un adaptateur SFN 14₂ afin de remplacer les paquets MIP (qui ne sont plus valables après remultiplexage du flux) et enfin d'ajouter un autre noeud 15₂ qui redistribue à chacun des émetteurs le nouveau signal dans lequel la ou les composantes C ont été insérées, tel qu'illustré par exemple par la plaque SFN2 12 dans la figure 1.

Un inconvénient majeur de cette technique de l'art antérieur est qu'elle entraîne une forte augmentation de la complexité et du coût de diffusion, en raison notamment de l'ajout d'un multiplexeur 13₂, d'un adaptateur SFN 14₂ et d'un noeud de redistribution 15₂.

En revanche, si l'on envisageait d'insérer les données locales ou régionales sans modifier l'architecture d'une plaque SFN d'origine, le réseau ne conserve pas sa caractéristique SFN car le signal en sortie de chaque modulateur DVB-T n'est plus identique d'un modulateur à l'autre.

Ainsi, un autre inconvénient de cette technique de l'art antérieur est qu'à une zone d'intersection des réseaux, les signaux peuvent devenir destructifs, c'est à dire qu'ils créent une zone de brouillage. De l'art antérieur on connaît:
- le document US2002/0140867 qui décrit une méthode de synchronisation de plusieurs transmetteurs RF;
- le document DE10139069 qui décrit une méthode pour mélanger des programmes locaux à des programmes nationaux.

### 3. Exposé de l'invention

L'invention propose une solution nouvelle qui ne présente pas tous ces inconvénients de l'art antérieur, sous la forme d'un procédé d'insertion d'au moins une composante dans un flux numérique d'origine organisé en paquets successifs, destiné à fournir un flux modifié devant être diffusé par un sous-ensemble d'au moins un émetteur d'un réseau de diffusion comprenant au moins deux émetteurs distincts utilisant une même fréquence d'émission.

Selon l'invention, un tel procédé comprend :
- une étape de construction d'au moins un fichier à insérer comprenant au moins une composante à insérer, et d'au moins un fichier de description d'insertion comprenant au moins une information d'horodatage de la ou desdites composantes à insérer, ladite information d'horodatage définissant l'instant d'insertion et/ou le cycle d'émission de cette composante dans le flux numérique d'origine,
- une étape d'insertion synchrone dans ledit flux numérique d'origine, par lesdits émetteurs dudit sous-ensemble, de la ou desdites composantes à insérer dudit fichier à insérer, l'étape d'insertion synchrone comportant :
- une initialisation d'un compteur temporel à partir de la détection de ladite au moins une information de référence, ladite information de référence étant du type information de programme ou information de service issue d'une signalisation associée audit flux numérique d'origine,
- un horodatage de ladite information de référence à partir dudit compteur temporel,
- une insertion de la ou desdites composantes à insérer au moment de la corrélation de ladite information de référence horodatée et de ladite information d'horodatage dudit fichier de description. Ainsi, l'invention repose sur une approche nouvelle et inventive de l'insertion de composante(s) dans un flux numérique par les émetteurs d'un réseau de diffusion, ne nécessitant aucune préparation du flux numérique au niveau national et, par conséquent, aucun équipement spécifique au niveau national.

Notamment, l'invention propose une méthode simple et efficace d'insertion de composante(s) qui permet de conserver efficacement et simplement la synchronisation entre les émetteurs du sous-ensemble d'un réseau de diffusion qui émettent un flux modifié contenant la ou les composantes insérées.

L'invention propose ainsi, selon un mode de réalisation particulier, une technique permettant de construire un fichier à insérer comprenant une ou plusieurs composantes à insérer, et d'insérer cette ou ces composantes de manière synchrone dans un flux numérique d'origine, en tenant compte d'informations issues d'un fichier de description, et notamment d'une information d'horodatage.

On rappelle qu'une composante correspond par exemple à un élément d'un signal composite, tel que la partie audio ou la partie vidéo d'un signal multimédia, et qu'un ensemble de composantes forme par exemple un service.

Ainsi, l'invention permet de synchroniser l'insertion ou le remplacement de composantes ou de services dans un flux numérique d'origine.

Cette étape d'insertion peut être répétée pour insérer différentes composantes et/ou services dans un même flux numérique d'origine.

Selon une caractéristique particulière de l'invention, le réseau de diffusion peut être un réseau de type SFN, comprenant au moins deux émetteurs distincts.

Notamment, l'invention permet d'insérer des composantes dans une plaque SFN régionale ou locale, par chaque émetteur, sans nécessiter l'ajout de multiplexeur et d'adaptateur SFN, ni de nouveau noeud de redistribution.

En particulier, la construction d'un fichier à insérer et d'un fichier de description peut se faire de façon centralisée, au niveau national, avant la diffusion du flux numérique d'origine vers chacun des émetteurs du réseau SFN.

Selon une variante de réalisation, la construction d'un fichier à insérer et d'un fichier de description peut se faire localement, au niveau de chaque émetteur du réseau SFN. L'information d'horodatage du fichier de description comprend un instant d'insertion et/ou un cycle d'émission de la ou desdites composantes à insérer; ainsi le procédé d'insertion selon invention permet d'insérer une composante à un instant précis et également d'insérer une composante à plusieurs instants, définis de façon cyclique par exemple. Selon une caractéristique particulière de l'invention, l'étape d'insertion tient également compte d'au moins une information de référence issue d'une signalisation associée audit flux numérique d'origine.

Notamment, une information de référence est de type information spécifique de programme ou information de service, et correspond à une table appartenant au groupe comprenant :
- les tables de date et d'heure,
- les tables de décalage d'heure,
- les tables d'allocation de programmes,
- les tables de correspondance de programmes.

Ainsi, l'utilisation d'au moins une information de référence issue d'une signalisation associée au flux numérique d'origine permet à tous les émetteurs du sous-ensemble de se baser sur la même information pour insérer la composante et donc de rester synchronisés pour conserver la caractéristique du réseau SFN considéré dans ce mode de réalisation particulier. L'étape d'insertion du procédé d'insertion selon l'invention met en oeuvre :
- une initialisation d'un compteur temporel à partir de ladite au moins une information de référence,
- un horodatage de ladite information de référence à partir dudit compteur temporel,
- une corrélation de ladite information de référence horodatée et de ladite information d'horodatage,
- une insertion de la ou desdites composantes à insérer.

Ainsi, chaque émetteur du sous-ensemble du réseau de diffusion insère la composante au même instant, calculé par chaque émetteur en fonction des mêmes données issues du flux numérique d'origine et des mêmes données de l'utilisateur.

Selon un aspect particulier de l'invention, la composante est insérée à la place d'au moins un paquet de bourrage du flux numérique d'origine.

Selon un autre aspect de l'invention, la composante est insérée à la place d'au moins une composante existante du flux numérique d'origine.

Ainsi, le procédé d'insertion selon l'invention peut insérer une composante sans en enlever dans le flux numérique d'origine en remplaçant les paquets de données non utiles (appelés paquets de bourrage) transportés dans le flux numérique d'origine par la composante à insérer. Le procédé d'insertion peut également remplacer une composante existante dans le flux par la composante à insérer. Ces deux aspects peuvent également être combinés.

En particulier, le procédé d'insertion selon l'invention peut comprendre une étape de modification de la signalisation associée au flux numérique d'origine, modifiant au moins une table appartenant au groupe comprenant :
- les tables de description de services,
- les tables de correspondance de programmes,
- les tables d'allocation de programmes.

Notamment, l'étape de modification de la signalisation peut modifier une table de correspondance de programmes dudit flux numérique d'origine, en mettant en oeuvre :
- une étape de remplacement d'un premier identifiant de paquets, permettant d'identifier au moins certains desdits paquets dudit flux numérique d'origine , par un deuxième identifiant de paquets, permettant d'identifier au moins un paquet portant une desdites composantes à insérer,
- une étape d'incrémentation d'un numéro de version.

En particulier, l'étape de modification de la signalisation peut modifier une table d'allocation de programmes dudit flux numérique d'origine en y insérant une déclaration d'au moins une nouvelle composante.

Ainsi, dans ce cas, le procédé selon l'invention permet de garantir la conformité du flux numérique modifié, après insertion des composantes, à une norme de diffusion respectée par le flux numérique d'origine, en modifiant la signalisation quand la composante insérée le nécessite, par exemple dans le cas où l'on souhaite insérer un nouveau service.

Selon un aspect particulier de l'invention, l'étape d'insertion comprend une étape de sécurisation de la synchronisation de l'insertion, permettant de s'affranchir d'une différence de synchronisation entre les informations de référence horodatées associées à chacun des émetteurs du sous-ensemble, ladite étape de sécurisation mettant en oeuvre une des techniques appartenant au groupe comprenant :
- une sécurisation avec hystérésis,
- une sécurisation avec insertion différée de la composante à insérer par rapport aux informations de référence horodatées.

Ainsi, dans ce cas, le procédé d'insertion garantit la synchronisation de l'insertion de la composante par les différents émetteurs concernés par exemple dans le cas où la différence de synchronisation entre ces émetteurs pourrait engendrer des instants d'insertion différents entre les émetteurs.

Selon un aspect particulier de l'invention, l'étape de construction du fichier à insérer tient également compte d'au moins une information de signalisation associée à la ou auxdites composantes à insérer.

Par exemple, le fichier à insérer comprend la ou les composantes à insérer et également la table de correspondance de programme décrivant la ou les composantes à insérer, de façon à garantir la conformité du flux modifié après insertion de la ou des composantes.

Selon ce mode de réalisation particulier, la ou lesdites composantes à insérer du fichier à insérer sont découpées en tenant compte d'au moins un élément du fichier de description appartenant au groupe comprenant :
- une précision temporelle d'insertion désirée,
- un débit souhaité associé à la ou auxdites composantes à insérer,
- une bande passante disponible associée audit flux numérique d'origine.

Ainsi, le fichier de description contient des données de l'utilisateur permettant de découper en morceaux le fichier à insérer, lesquels morceaux sont destinés à être directement insérés dans le flux numérique d'origine.

Notamment, le découpage du fichier à insérer peut permettre au flux numérique modifié de respecter la norme du flux numérique d'origine.

Dans ce cas, le découpage du fichier à insérer correspond à une mise en forme interne particulière du fichier à insérer, pouvant être réalisée, dans une variante particulière de ce mode de réalisation, à l'aide de balises séparant les différents morceaux entre eux.

Selon un autre aspect, l'invention concerne un dispositif d'insertion d'au moins une composante dans un flux numérique d'origine organisé en paquets successifs, destiné à fournir un flux modifié devant être diffusé par un sous-ensemble d'au moins un émetteur d'un réseau de diffusion comprenant au moins deux émetteurs distincts utilisant une même fréquence d'émission.

Ce dispositif comprend :
- des moyens de construction d'au moins un fichier à insérer comprenant au moins une composante à insérer, et d'au moins un fichier de description d'insertion comprenant au moins une information d'horodatage de la ou desdites composantes à insérer, ladite information d'horodatage définissant l'instant d'insertion et/ou le cycle d'émission de cette composante dans le flux numérique d'origine,- des moyens d'insertion synchrone dans ledit flux numérique d'origine, par lesdits émetteurs dudit sous-ensemble, de la ou desdites composantes à insérer dudit fichier à insérer, ledit moyen d'insertion synchrone initialisant un compteur temporel à partir de la détection de ladite au moins une information de référence, ladite information de référence étant du type information de programme ou information de service issue d'une signalisation associée audit flux numérique d'origine, et horodatant ladite information de référence à partir dudit compteur temporel, l'insertion de la ou desdites composantes à insérer s'effectuant au moment de la corrélation de ladite information de référence horodatée et de ladite information d'horodatage dudit fichier de description. Un tel dispositif d'insertion est notamment adapté à mettre en oeuvre le procédé d'insertion décrit précédemment.

Un autre aspect de l'invention concerne également un produit programme d'ordinateur selon la revendication 12.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1, déjà décrite en relation avec l'art antérieur, présente un réseau SFN selon l'art antérieur ;
- la figure 2 illustre un exemple de réseau SFN selon un mode de réalisation particulier de l'invention ;
- la figure 3 décrit un synoptique général du système d'insertion de la figure 2 ;
- la figure 4 illustre la diffusion de tables d'allocation de programmes et de tables de date et d'heure selon l'art antérieur ;
- la figure 5 présente l'insertion de composante(s) dans un flux numérique d'origine selon un mode de réalisation particulier de l'invention ;
- la figure 6 illustre un exemple de sécurisation avec hystérésis de l'insertion selon un mode de réalisation particulier de l'invention ;
- la figure 7 illustre un exemple de sécurisation avec insertion différée selon un mode de réalisation particulier de l'invention ;
- la figure 8 présente un exemple d'insertion d'un flux existant selon un mode de réalisation particulier de l'invention ;
- la figure 9 présente un exemple de découpage du fichier à insérer selon un mode de réalisation particulier de l'invention ;
- la figure 10 présente une structure d'un dispositif d'insertion mettant en oeuvre une technique d'insertion de composante(s) selon un mode de réalisation particulier de l'invention ;
- La figure 11 présente un exemple de procédé d'insertion selon un mode de réalisation de l'invention.

### 5. Description détaillée de l'invention

### 5.1 Principe général

Le principe général de l'invention repose sur une insertion de composantes dans un flux numérique, permettant notamment, selon un mode de réalisation particulier, d'insérer des programmes locaux ou régionaux de façon synchrone, sans modifier le flux numérique au niveau national, dans un réseau de diffusion comprenant une pluralité d'émetteurs utilisant une même fréquence d'émission.

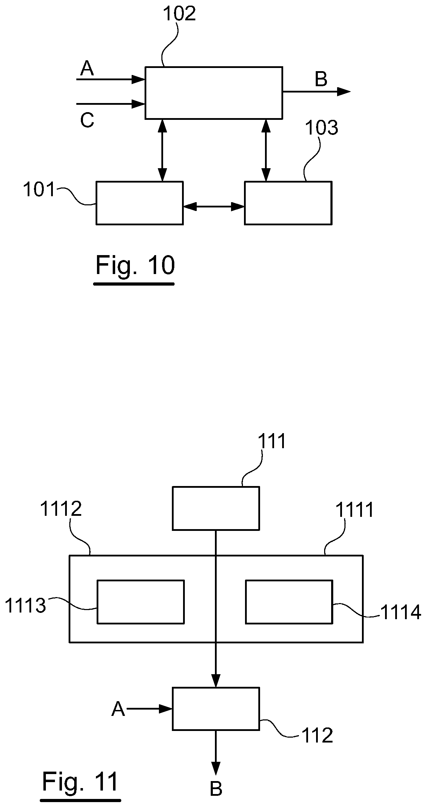

Plus précisément, comme illustré par la figure 11, la technique d'insertion selon l'invention comprend une étape 111 de construction d'un fichier à insérer 1112 comprenant la composante à insérer 1113 et d'un fichier de description d'insertion 1111, comprenant au moins une information d'horodatage 1114 de la composante, et une étape 112 d'insertion synchrone permettant d'insérer dans le flux numérique d'origine A la composante du fichier à insérer, en tenant compte de l'information d'horodatage 1114 contenue dans le fichier de description, pour former un flux numérique modifié B à émettre.

Ainsi, la technique selon l'invention permet d'insérer, par exemple par remplacement de paquets dans le flux numérique d'origine, la même composante aux mêmes instants par les émetteurs du réseau de diffusion, qui conserve ainsi sa caractéristique principale, à savoir que les émetteurs sont synchrones et utilisent la même fréquence d'émission pour émettre le même signal.

Dans un souci de simplification et de clarté, on détaille ci-après l'application de la technique selon l'invention à un réseau SFN qui comprend une tête de réseau 10 et une plaque SFN1 11, tel qu'illustré en figure 2.

On considère également selon ce mode de réalisation particulier de l'invention que le flux numérique d'origine et les composantes C à insérer sont formatés en paquets MPEG2-TS selon la norme 13818-1.

L'homme du métier étendra facilement cet enseignement à d'autres formats de signaux.

De plus, on décrit plus précisément l'insertion d'une unique composante. Il est bien entendu que l'invention couvre également les cas où plusieurs composantes, ou un service formé de plusieurs composantes, sont insérés, et que la généralisation est directe.

Dans un réseau tel qu'illustré en figure 2, la tête de réseau 10 transmet à un réseau, ou noeud de distribution, 15 un flux numérique d'origine A, composé d'éléments ou composantes multiplexées A₁, A₂ ... Aₙ. Ce noeud de distribution 15 diffuse le flux numérique d'origine A vers chacun des émetteurs E11₁ et E11₂ d'une plaque SFN 11. Chaque émetteur comprend un adaptateur de réseau en réception 17₁, 17₂, un inserteur 20₁, 20₂, mettant en oeuvre le procédé d'insertion selon l'invention et transformant le flux numérique d'origine A en un flux modifié B comprenant la composante insérée, un système de synchronisation 18₁, 18₂, et un modulateur DVB-T 19₁, 19₂.

De plus, selon ce mode de réalisation particulier de l'invention, l'inserteur 20₁, 20₂, présente une entrée et une sortie ASI ("Asynchronous Serial Interface" en anglais) et le procédé d'insertion selon l'invention permet de garantir que le multiplexage du flux ASI de sortie soit identique à celui du flux ASI d'entrée, à l'exception de la composante insérée.

Dans la suite de la description, on utilise une même référence numérique pour désigner des éléments communs aux différentes figures.

### 5.2 Structure d'un flux MPEG2-TS

Un flux MPEG2-TS est classiquement formé d'une suite de paquets dont le format peut être de 188 ou 204 octets. Le débit total d'un flux TS tel que décrit dans ce mode particulier de réalisation de l'invention est fixé lors de la mise en exploitation de la chaîne de diffusion. Un tel flux peut contenir des paquets de données utiles et des paquets de bourrage ne transportant aucune donnée et qui sont nécessaires au maintien d'un débit constant.

Selon différentes variantes de réalisation de l'invention, l'insertion de la composante peut se faire à la place des paquets de bourrage du flux numérique d'origine, dans le cas de l'insertion d'un nouveau service par exemple, ou à la place de composante(s) déjà existante(s) dans le flux numérique d'origine.

Ainsi, on peut ajouter des nouvelles composantes et/ou services et/ou remplacer des composantes et/ou services existants selon différents modes de réalisation de l'invention.

On considère également selon ce mode de réalisation particulier de l'invention, que le flux numérique d'origine garantit un débit minimum des paquets de bourrage.

De plus, un procédé d'insertion selon le mode particulier décrit consiste à utiliser des informations de signalisation de type information spécifique de programme ("PSI" : "Program Specific Information" en anglais) ou information de service ("SI" : "Service Information" en anglais) transportées par le flux numérique d'origine, formaté selon la norme MPEG2-TS, pour garantir la synchronisation de l'insertion. Selon ce mode de réalisation particulier, les informations de signalisation utilisées sont des tables d'allocation de programmes ("PAT" : "Program Allocation Table" en anglais) et des tables de date et d'heure ("TDT" : "Time and Date Table" en anglais).

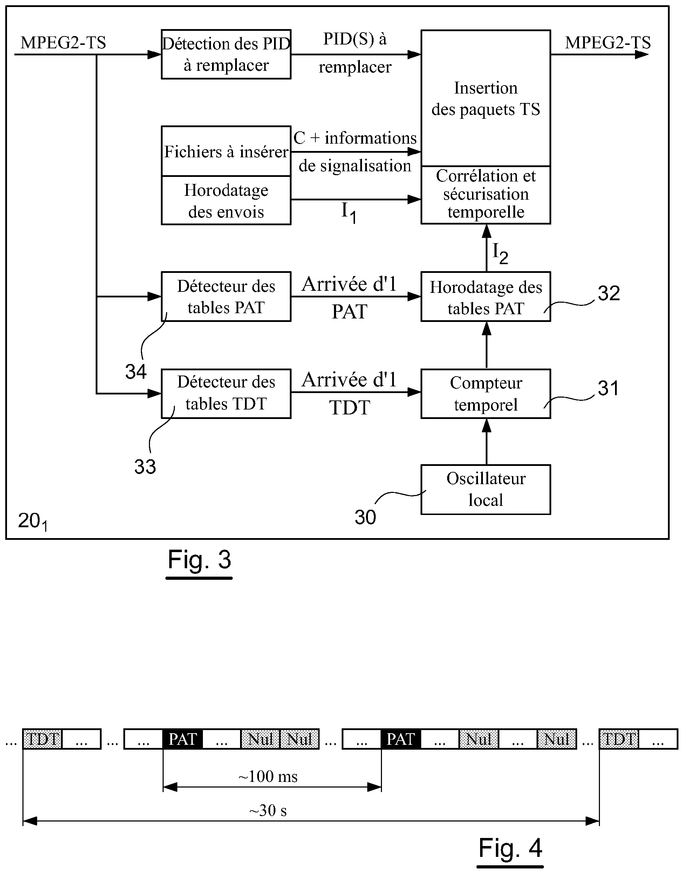

Comme illustré en figure 4, ces tables sont émises à intervalles réguliers, par exemple en moyenne une table PAT toutes les 0,1 seconde et une table TDT toutes les 30 secondes. Cependant, il est à noter que le procédé d'insertion selon l'invention s'adapte automatiquement en fonction d'éventuelles variations de récurrence de ces tables.

Selon une variante de réalisation envisagée, les tables TDT sont utilisées comme référence d'horodatage des paquets des tables PAT, qui servent alors elles-mêmes de référence pour la synchronisation de l'insertion de la composante, comme présenté dans le paragraphe 5.4.

Dans la suite de la description, on emploie indifféremment les expressions "composante à insérer" ou "fichier à insérer".

### 5.3 Construction d'un fichier à insérer et d'un fichier de description d'insertion

### 5.3.1 Formatage du fichier à insérer

Comme indiqué précédemment, la technique d'insertion d'une composante selon l'invention comprend une étape de construction d'un fichier à insérer comprenant notamment la composante à insérer.

Dans le mode particulier de réalisation décrit, le fichier à insérer est construit de façon à respecter la norme 13818-1 et être formaté en paquets MPEG2-TS. On rappelle que ce formatage peut être fait localement au niveau de chaque émetteur du réseau de diffusion, ou de façon centralisée avant la distribution du flux vers chaque émetteur du réseau de diffusion.

Optionnellement, le fichier à insérer peut contenir les informations de signalisation nécessaires au système de diffusion pour décrire la composante insérée. Par exemple, si l'on souhaite insérer un nouveau service, les informations de signalisation doivent permettre de déclarer ce nouveau service, pour rester en conformité avec la norme de diffusion utilisée.

Les informations de signalisation sont à insérer dans le fichier à insérer lors de son formatage et comprennent par exemple une table de correspondance de programme ("PMT" pour "Program Map Table") qui décrit la nouvelle composante ou le nouveau service inséré.

En particulier, aucune information de signalisation n'est fournie par le fichier à insérer dans le cas où la composante à insérer est une composante "fantôme" (cf. §5.4.2) ou remplace des paquets existants du flux numérique d'origine.

### 5.3.2 Construction du fichier de description d'insertion

Selon ce mode de réalisation, le fichier de description d'insertion, aussi noté fichier de description, contient une information d'horodatage de la composante à insérer, comprenant par exemple un instant d'insertion et/ou un cycle d'émission de cette composante. Lors de l'étape d'insertion synchrone, cette information d'horodatage est mise en corrélation avec une information détectée par un inserteur dans le flux numérique d'origine pour assurer la synchronisation de l'insertion.

Le fichier de description selon ce mode de réalisation contient également des éléments permettant le découpage ultérieur du fichier à insérer, décrit plus précisément dans le paragraphe 5.3.3, de façon à ce que le fichier à insérer soit inséré par morceaux dans le flux numérique d'origine.

Notamment, les éléments permettant de découper le fichier à insérer peuvent être :
- une précision temporelle d'insertion désirée, encore appelée précision horodatée ou granularité P,
- un débit d'insertion souhaité,
- une bande passante disponible associée au flux numérique d'origine.

### 5.3.3 Découpage du fichier à insérer

Selon ce mode de réalisation particulier de l'invention, le fichier à insérer doit donc être découpé avant d'être inséré par morceaux dans le flux numérique d'origine. A partir notamment des éléments décrits dans le paragraphe 5.3.2 (granularité d'insertion P, débit d'insertion souhaité, bande passante disponible), le nombre de paquets M à insérer entre deux instants de granularité P est calculé, et le fichier à insérer est découpé en X morceaux de M paquets. En fonction de l'horodatage souhaité par l'utilisateur, les instants d'insertion de chacun de ces X morceaux sont calculés.

Ainsi, si un inserteur est redémarré ou réinitialisé en cours d'insertion, il peut reprendre l'insertion au début du morceau correspondant à l'horodatage d'insertion, et non pas au début du fichier à insérer, ce qui évite toute désynchronisation entre les différents inserteurs du réseau de diffusion. Ce découpage en X morceaux de n octets permet donc d'assurer la synchronisation d'insertion du fichier à insérer.

Par exemple, dans le cas où l'on veut insérer une nouvelle composante à la place des paquets de bourrage, et où l'utilisateur souhaite avoir :
- un débit d'insertion de 150,4 kbit/s et
- une précision temporelle d'insertion de 1 seconde,
alors le fichier à insérer est découpé en morceaux ou salves de 100 paquets. Une salve de 100 paquets est insérée toutes les secondes à la place des paquets de bourrage par l'inserteur.

Il est à noter dans ce cas que la technique d'insertion selon l'invention nécessite d'avoir un débit d'insertion souhaité relativement inférieur au débit des paquets de bourrage du flux numérique d'origine, car il est impossible d'utiliser toute la bande passante des paquets de bourrage pour insérer la/les composantes.

### 5.3.4 Conversion d'un flux numérique existant en fichier à insérer

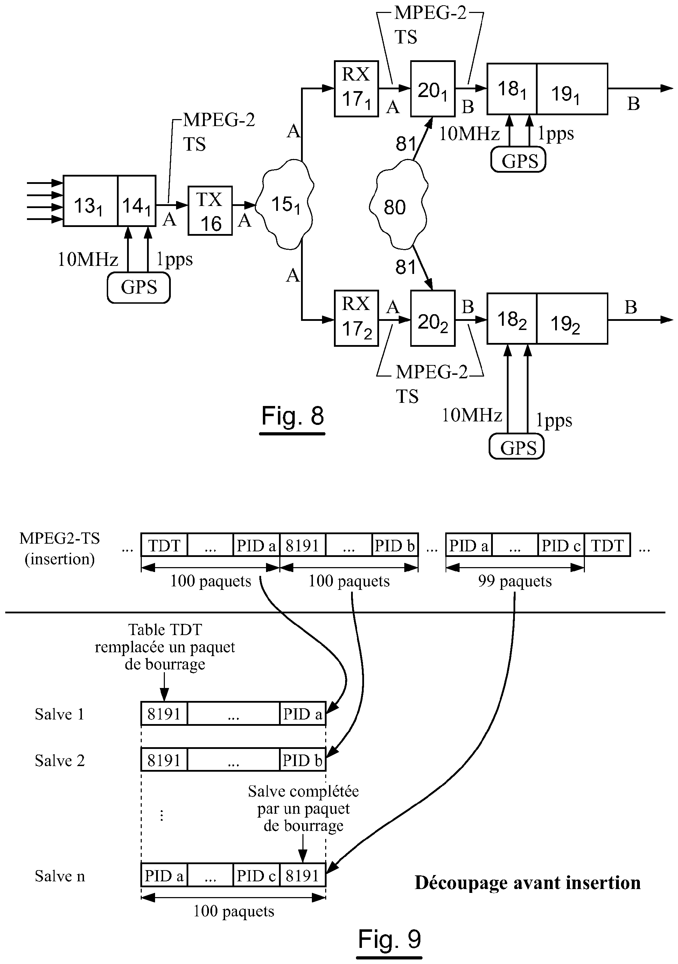

Selon une variante de ce mode de réalisation particulier de l'invention illustrée en figure 8, le fichier à insérer peut être issu de la conversion d'un flux numérique existant 81 diffusé par un réseau de diffusion 80. On rappelle que ce flux doit être conforme à la norme 13818-1 pour le format des paquets et la signalisation de type PSI et à la norme EN 300 468 pour la signalisation de type SI.

Selon cette variante, le flux 81 à insérer est directement converti en fichier à insérer par les inserteurs 20₁, 20₂, situés en amont des systèmes de synchronisation 18₁, 18₂, et des modulateurs 19₁, 19₂ des émetteurs E11₁ et E11₂ de la plaque SFN 11. Les mêmes critères que ceux définis dans le paragraphe 5.3.2 sont utilisés pour le découpage en morceaux de M paquets du flux à insérer.

Pour déterminer les instants d'insertion des morceaux ou salves du flux à insérer, selon cette variante de réalisation, une table TDT du flux 81 à insérer est utilisée comme référence. L'horodatage de la table TDT du flux à insérer, auquel est ajouté un décalage avec l'horodatage du flux numérique d'origine A (ce décalage étant déterminé par l'utilisateur et identique pour tous les inserteurs de la plaque du réseau de diffusion) sert à déterminer l'instant d'insertion de la première salve du flux à insérer.

Ainsi, la technique d'insertion selon l'invention garantit une même décision d'insertion au même instant pour tous les inserteurs.

Un exemple de découpage d'un flux existant à insérer est illustré en figure 9. On considère de nouveau un débit d'insertion souhaité à 150kbit/s et une précision temporelle d'insertion souhaitée à 1 seconde comme proposé dans le paragraphe précédent, ce qui signifie que le flux à insérer est découpé en salves de 100 paquets. De plus, toutes les tables transportées par ce flux à insérer qui sont déjà présentes dans le flux numérique d'origine sont remplacées par des paquets de bourrage. La dernière salve du flux à insérer est finalement complétée par des paquets de bourrage jusqu'à la table TDT suivante.

Les mêmes contraintes sur le débit souhaité par rapport au débit des paquets de bourrage telles que décrites dans le paragraphe précédent 5.3.3 sont à respecter dans le cas de l'insertion d'un flux existant.

### 5.4 Insertion synchrone de composante(s)

La deuxième étape du procédé d'insertion selon l'invention correspond à l'insertion des composantes, à partir du fichier à insérer construit au préalable.

### 5.4.1 Synoptique général du Procédé d'insertion

Comme illustré en figure 3, un inserteur, par exemple l'inserteur 20₁ initialise un compteur temporel 31 à partir de chaque table TDT reçue. Cette détection des tables TDT dans le flux numérique d'origine peut être réalisée par exemple grâce à une référence externe, par exemple de type UTC ("Universal Time Coordinated" en anglais) transportée par ces tables. Ainsi le détecteur de tables TDT 33 transmet au compteur temporel 31 une information d'arrivée de table TDT à chaque table TDT détectée.

Ce compteur temporel 31 est piloté par l'oscillateur local 30 de l'inserteur et permet d'horodater ensuite chaque table PAT détectée par le détecteur de tables PAT 34. Celui-ci envoie une information d'arrivée de table PAT au système d'horodatage des tables PAT 32 de l'inserteur, à chaque table PAT détectée.

Notamment, le fait d'utiliser des tables PAT plutôt que d'utiliser directement des tables TDT permet d'obtenir une granularité plus fine de l'insertion, car la récurrence généralement utilisée pour les tables TDT est de 30 secondes.

De plus, l'utilisation des tables PAT est facilitée par l'invariabilité de l'identifiant des paquets ("PID" pour "Packet Identifier"), fixé à 0 par la norme ISO 13818-1, transportés par cette table, mais les tables PMT peuvent également être utilisées, leurs PID étant cependant variables.

L'inserteur réalise ensuite une corrélation entre l'information d'horodatage I₁ de la composante C à insérer issue du fichier de description (cf. §5.3.1) et l'horodatage I₂ des tables PAT réalisé par le système d'horodatage des tables PAT 32 comme décrit ci-dessus, pour déterminer l'instant d'insertion de la composante C du fichier à insérer.

Pour tenir compte d'éventuels glissements fréquentiels des oscillateurs locaux des différents inserteurs des différents émetteurs d'une plaque SFN, une sécurisation de la synchronisation de l'insertion est mise en oeuvre dans ce mode de réalisation particulier, et est décrite dans le paragraphe 5.5.

L'inserteur effectue également une détection des PIDs des paquets à remplacer, en fonction des informations contenues dans le fichier de description, et peut ensuite insérer, dans le flux numérique d'origine, la composante à insérer du fichier à insérer.

La composante peut être insérée soit à la place des paquets de bourrage du flux numérique d'origine (dont le PID est 8191), soit à la place d'une ou de composantes déjà existantes dans le flux numérique d'origine (identifiées par un ou plusieurs PIDs). Dans ce dernier cas, le procédé d'insertion de l'invention permet de modifier la signalisation du flux numérique d'origine pour prendre en compte la composante insérée (cf. §5.4.3).

Cette technique selon l'invention permet aussi la lecture en boucle du fichier à insérer, dans le cas d'insertion en boucle de la composante.

### 5.4.2 Insertion de composante "fantôme"

Une composante "fantôme" est une composante qui n'est pas décrite dans la signalisation. Selon un mode de réalisation particulier de l'invention, une composante "fantôme" est insérée à la place de paquets de bourrage du flux numérique d'origine, sans modifier la signalisation.

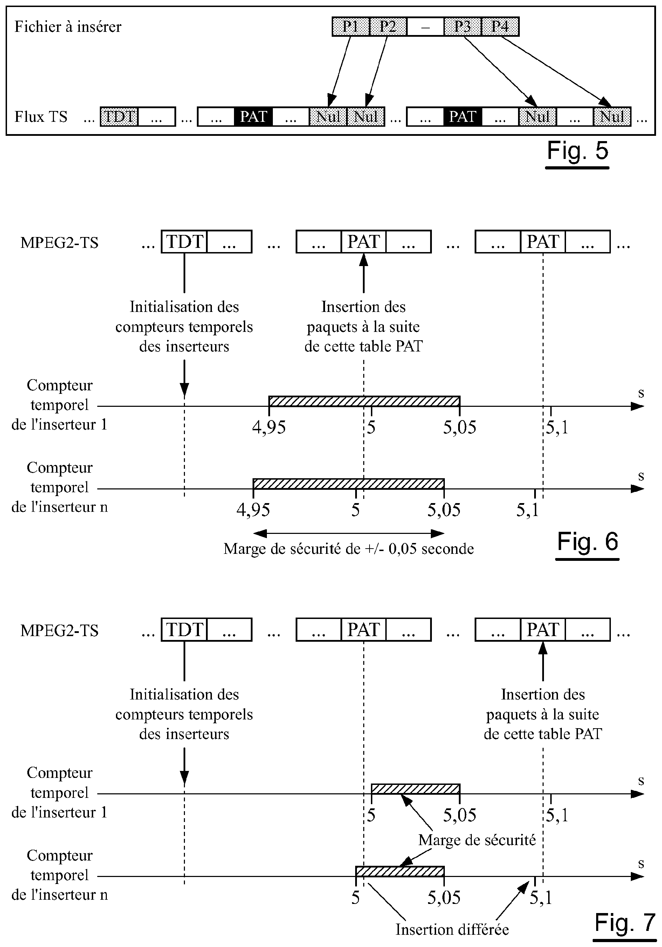

Par exemple, comme illustré en figure 5, les paquets du fichier à insérer sont insérés à la place des paquets de bourrage du flux numérique d'origine, noté "Nul", après chaque table PAT reçue, selon le synoptique général du procédé d'insertion décrit au paragraphe 5.4.1.

### 5.4.3 Modification de la signalisation

Une modification de la signalisation transportée par le flux numérique d'origine est nécessaire par exemple dans le cas où les composantes à insérer forment un nouveau service. Ce nouveau service doit être déclaré dans une table PMT, comme décrit dans le paragraphe 5.3.2, contenue dans le fichier à insérer.

### 5.4.3.1 Modification des tables

L'inserteur doit modifier les tables présentes dans le flux numérique d'origine de façon que celui-ci reste conforme à la norme après insertion de la composante.

Notamment, l'inserteur prend en charge la modification de la signalisation du flux numérique d'origine, à partir de l'instant d'insertion, sans en modifier la récurrence.

Par exemple, si la composante à insérer est une composante d'un service existant, la table PAT du flux numérique d'origine n'a pas à être modifiée. Dans ce cas, si le PID des paquets à insérer est différent de celui des paquets qui seront remplacés (dans le flux numérique d'origine), l'inserteur modifie la table PMT en conséquence, cette table étant celle où sont déclarés les PID des paquets transportés dans le flux.

Par contre, si les composantes à insérer forment un nouveau service, alors l'inserteur doit modifier la table PAT pour y déclarer un nouveau service, à partir des informations de la table PMT décrite dans le fichier à insérer.

Dans ces deux exemples de réalisation, l'inserteur ne modifie ni la récurrence de la table ni l'indice de continuité ("continuity counter" en anglais), qui doit être une copie de la valeur de la table du flux numérique d'origine.

### 5.4.3.2 Incrémentation du numéro de version de la table modifiée

En plus de la modification de la signalisation, l'inserteur peut également incrémenter le numéro de version de chaque table modifiée, comme le spécifie la norme MPEG2-TS.

Dans un premier temps, l'inserteur incrémente le numéro de version pour signaler aux récepteurs la modification du flux numérique.

Dans un deuxième temps, le numéro de version va être incrémenté jusqu'à retrouver sa valeur initiale dans le flux numérique d'origine. Par exemple, dans un mode de réalisation particulier de l'invention, le numéro de version est un numéro modulo 32 et est incrémenté de 32 fois à chaque modification de la table.

Cette technique d'incrémentation du numéro de version selon l'invention permet d'éviter tout problème de synchronisme dans le cas d'un redémarrage d'un ou de plusieurs inserteurs. En effet, même si un ou plusieurs inserteurs redémarrent, le numéro de version sera incrémenté jusqu'à retrouver sa valeur initiale, connue de tous les inserteurs.

De plus, si la valeur du numéro de version de la table transportée par le flux numérique d'origine évolue, l'inserteur tient compte systématiquement de cette évolution.

Dans les exemples précédents, l'inserteur peut avoir à incrémenter le numéro de version de la table PAT et/ou de la table PMT.

### 5.5 Sécurisation de l'insertion

La référence temporelle utilisée dans un mode de réalisation particulier de l'invention est la table TDT transportée par le flux numérique d'origine, comme décrit dans le paragraphe 5.4.1. A partir de cette table, l'inserteur horodate les tables PAT de ce même flux et détermine l'instant d'insertion des morceaux ou salves du fichier à insérer (selon le découpage décrit en paragraphe 5.3.3).

L'utilisateur peut choisir la précision temporelle d'insertion, ou précision horodatée P telle que définie au paragraphe 5.3.2, qui déterminera la décision d'insertion. Par exemple, si l'utilisateur souhaite l'insertion des salves toutes les secondes entières, l'inserteur attend la détection de la première table PAT après la valeur de seconde entière calculée à partir de son compteur temporel (cf. §5.4.1) pour prendre la décision d'insertion. Cette approche garantit que tous les inserteurs concernés dans la plaque SFN prendront la même décision d'insertion.

Cette solution permet également l'insertion en boucle des composantes, donc des salves du fichier à insérer, par exemple toute les n secondes.

Cependant, dans le cas particulier où l'occurrence de la table PAT est temporellement proche d'une valeur entière de la précision temporelle d'insertion souhaitée par l'utilisateur, l'horodatage des tables PAT (délivrant une information de référence horodatée), peut différer sensiblement dans une petite plage temporelle, en fonction des inserteurs et de leurs oscillateurs locaux (qui peuvent ne pas être synchrones) et entraîner des décisions d'insertion non synchrones.

On présente ci-après à titre d'exemple deux techniques de sécurisation de l'insertion pouvant être mises en oeuvre :
- une insertion avec hystérésis,
- une insertion différée.

### 5.5.1 Sécurisation avec hystétéris

Cet exemple de sécurisation de l'insertion consiste à déterminer une marge de sécurité autour de la valeur de précision temporelle d'insertion choisie par l'utilisateur, avant de prendre la décision d'insertion.

Par exemple, si la précision temporelle d'insertion choisie est la seconde entière, et que l'occurrence de la table PAT arrive à une valeur proche de la seconde entière, la décision d'insertion sera prise si la table PAT arrive dans la marge temporelle spécifiée autour de la seconde entière.

Ainsi, comme illustré en figure 6, l'horodatage de la table PAT n'est pas le même pour les deux inserteurs : le premier inserteur horodate la table PAT de seconde entière à un peu plus de 5s (5,01s) et le deuxième inserteur à un peu moins de 5s (4,99s), la table PAT suivante arrivant 0,1s après. Si les deux inserteurs prennent en compte une marge de sécurité de +/-0,05s d'autorisation d'insertion, les deux inserteurs vont insérer le morceau du fichier à insérer après la table PAT considérée.

### 5.5.2 Sécurisation avec insertion différée

Cet exemple de sécurisation de l'insertion consiste à déterminer une marge de sécurité après la valeur de précision temporelle d'insertion choisie par l'utilisateur, avant de prendre la décision d'insertion.

Par exemple, si la précision temporelle d'insertion choisie est la seconde entière, et que l'occurrence de la table PAT arrive à une valeur proche de la seconde entière, la décision d'insertion sera prise à partir de la prochaine table PAT.

Comme illustré en figure 7, l'horodatage de la table PAT n'est pas le même pour les deux inserteurs : le premier inserteur horodate la table PAT de seconde entière à un peu plus de 5s (5,01s) et le deuxième inserteur à un peu moins de 5s (4,99s), la table PAT suivante arrivant 0,1s après. Si les deux inserteurs prennent en compte une marge de sécurité de 0,05s d'interdiction d'insertion, les deux inserteurs vont insérer le morceau du fichier à insérer après la table PAT suivante, c'est à dire celle arrivant autour de 5,1s.

### 5.6 Exemples de réalisation,

On présente ci-après trois exemples purement illustratifs de l'insertion de composantes.

### 5.6.1 Création et insertion d'une composante fantôme

Comme indiqué précédemment, une composante fantôme n'est pas décrite dans la signalisation. Dans l'exemple qui suit, l'insertion de la composante fantôme est réalisée à la place des paquets de bourrage du flux numérique d'origine sans modifier la signalisation.

Les caractéristiques du fichier à insérer sont les suivantes :
- une taille de 3 Moctets,
- aucune information de signalisation.

Les caractéristiques du fichier de description sont les suivantes :
- une heure d'insertion souhaitée : 11h00,
- un débit d'insertion souhaité de 150,4 Kbit/s,
- une précision temporelle d'insertion : la seconde entière.

L'inserteur a en charge d'insérer les salves du fichier à insérer à la place des paquets de bourrage (dont le PID est 8191 selon la norme 13818-1) et de tenir compte d'une sécurisation différée d'insertion de 0,05s.

Le flux numérique d'origine a pour caractéristiques :
- un débit de 24,128 Mbits/s, en paquets de 188 octets,
- une redondance de la table PAT de 0,1s,
- un débit des paquets de bourrage de 200 Kbits/s.

L'inserteur découpe le fichier à insérer en morceaux de 100 paquets de 188 octets, et horodate chaque morceau de la façon suivante : le premier à 11h00m00s, le deuxième à 11h00m01s ...

L'inserteur détecte la première table PAT arrivant après 11h00m00s. Si celle-ci arrive entre 11h00m00s et 11h00m05s, l'inserteur attend la prochaine table PAT pour insérer le premier morceau du fichier à insérer à la place des paquets de bourrage ; sinon, il l'insère à la place des paquets de bourrage qui suivent la table PAT détectée.

### 5.6.2 Remplacement d'une composante existante

Les caractéristiques du fichier à insérer sont les suivantes :
- une taille de 3 Moctets,
- indication du PID de la composante à insérer.

Les caractéristiques du fichier de description sont les suivantes :
- une heure d'insertion souhaitée : 11h00,
- un débit d'insertion souhaité de 150,4 Kbit/s,
- une précision temporelle d'insertion : la seconde entière.

L'inserteur a en charge d'insérer les salves du fichier à insérer à la place des paquets d'une composante existante dans le flux numérique d'origine et de tenir compte d'une sécurisation différée d'insertion de 0,05s.

Le flux numérique d'origine a pour caractéristiques :
- un débit de 24,128 Mbits/s, en paquets de 188 octets,
- une redondance de la table PAT de 0,1s,
- un débit des paquets de bourrage de 200 Kbits/s.

L'inserteur découpe le fichier à insérer en morceaux de 100 paquets de 188 octets, et horodate chaque morceau de la façon suivante : le premier à 11h00m00s, le deuxième à 11h00m01s ...

L'inserteur détecte la première table PAT arrivant après 11h00m00s. Si celle-ci arrive entre 11h00m00s et 11h00m05s, l'inserteur attend la prochaine table PAT pour insérer le premier morceau du fichier à insérer à la place des paquets de la composante existante, sinon, il l'insère à la place des paquets de la composante existante qui suivent la table PAT détectée.

Si le PID des paquets de la composante existante à remplacer est différent de celui de la composante à insérer, l'inserteur modifie la table PMT du flux numérique d'origine, comme décrit dans le paragraphe 5.4.3.1.

### 5.6.3 Insertion d'un nouveau services, à partir d'un flux existant

Les caractéristiques du fichier à insérer sont les suivantes :
- une taille de 3 Moctets,
- présence de la table PMT décrivant le nouveau service (ce fichier à insérer résultant de la conversion d'un flux MPEG2-TS existant (cf. §5.3.4)).

Les caractéristiques du fichier de description sont les suivantes :
- une heure d'insertion souhaitée : 11h00,
- un débit d'insertion souhaité de 150,4 Kbit/s,
- une précision temporelle d'insertion : la seconde entière.

L'inserteur a en charge d'insérer les salves du fichier à insérer à la place des paquets de bourrage du flux numérique d'origine et de tenir compte d'une sécurisation différée d'insertion de 0,05s.

Le flux numérique d'origine a pour caractéristiques :
- un débit de 24,128 Mbits/s, en paquets de 188 octets,
- une redondance de la table PAT de 0,1s,
- un débit des paquets de bourrage de 200 Kbits/s.

L'inserteur découpe le fichier à insérer en morceaux de 100 paquets de 188 octets, et horodate chaque morceau de la façon suivante : le premier à 11h00m00s, le deuxième à 11h00m01s ...

L'inserteur détecte la première table PAT arrivant après 11h00m00s. Si celle-ci arrive entre 11h00m00s et 11h00m05s, l'inserteur attend la prochaine table PAT pour insérer le premier morceau du fichier à insérer à la place des paquets de bourrage, sinon, il l'insère à la place des paquets de bourrage qui suivent la table PAT détectée.

L'inserteur modifie également la table PAT pour y déclarer le nouveau service (cf. § 5.4.3), à partir des informations de la table PMT issue du fichier à insérer.

### 5.7 Structure du dispositif d'insertion

On présente désormais, en relation avec la figure 10, la structure simplifiée d'un dispositif d'insertion mettant en oeuvre un procédé d'insertion de composante selon le mode de réalisation particulier décrit ci-dessus.

Un tel dispositif d'insertion comprend une mémoire 101, une unité de traitement 102, équipée par exemple d'un microprocesseur µP, et pilotée par le programme d'ordinateur 103, mettant en oeuvre le procédé d'insertion selon l'invention.

A l'initialisation, les instructions de code du programme d'ordinateur 103 sont par exemple chargées dans une mémoire RAM avant d'être exécutées par le processeur de l'unité de traitement 102. L'unité de traitement 102 reçoit en entrée au moins le flux numérique d'origine A, la composante C à insérer et les informations permettant de construire le fichier de description d'insertion (par exemple la précision temporelle d'insertion et le débit d'insertion souhaités selon le mode de réalisation particulier décrit dans le paragraphe 5.3). Le microprocesseur de l'unité de traitement 102 met en oeuvre les étapes du procédé d'insertion décrit précédemment, et notamment l'initialisation d'un compteur temporel, l'horodatage des tables PAT délivrant une information de référence horodatée, la corrélation entre cette information de référence horodatée et l'information d'horodatage issue du fichier de description et l'insertion de la composante C dans le flux numérique d'origine A, selon les instructions du programme d'ordinateur 103.

L'unité de traitement 102 délivre en sortie un flux numérique modifié B, construit en mettant en oeuvre les étapes du procédé d'insertion décrites précédemment.

## Revendications

1. Procédé d'insertion d'au moins une composante (C) dans un flux numérique d'origine (A) organisé en paquets successifs, destiné à fournir un flux modifié (B) devant être diffusé par un sous-ensemble d'au moins un émetteur d'un réseau de diffusion (11) comprenant au moins deux émetteurs distincts (E11₁, E11₂) utilisant une même fréquence d'émission,
**caractérisé en ce qu'**il comprend :
- une étape de construction d'au moins un fichier à insérer comprenant au moins une composante à insérer, et d'au moins un fichier de description d'insertion comprenant au moins une information d'horodatage (I₁) de la ou desdites composantes à insérer, ladite information d'horodatage (I1) définissant l'instant d'insertion et/ou le cycle d'émission de cette composante dans le flux numérique d'origine,
- une étape d'insertion synchrone dans ledit flux numérique d'origine (A), par lesdits émetteurs dudit sous-ensemble, de la ou desdites composantes à insérer dudit fichier à insérer, l'étape d'insertion synchrone comportant :
- une initialisation d'un compteur temporel (31) à partir de la détection de ladite au moins une information de référence, ladite information de référence étant du type information de programme ou information de service issue d'une signalisation associée audit flux numérique d'origine,
- un horodatage de ladite information de référence à partir dudit compteur temporel (31),
- une insertion de la ou desdites composantes à insérer au moment de la corrélation de ladite information de référence horodatée (I2) et de ladite information d'horodatage (I1) dudit fichier de description.

2. Procédé d'insertion selon la revendication 1, **caractérisé en ce que** ladite au moins une information de référence correspond à une table appartenant au groupe comprenant :
- les tables de date et d'heure,
- les tables de décalage d'heure,
- les tables d'allocation de programmes,
- les tables de correspondance de programmes.

3. Procédé d'insertion selon l'une quelconque des revendications 1 ou 2, **caractérisé en ce qu'**au moins une desdites composantes est insérée à la place d'au moins un paquet de bourrage dudit flux numérique d'origine (A).

4. Procédé d'insertion selon l'une quelconque des revendications 1 à 3, **caractérisé en ce qu'**au moins une desdites composantes est insérée à la place d'au moins une composante (C) existante dudit flux numérique d'origine (A).

5. Procédé d'insertion selon l'une quelconque des revendications 1 à 4, **caractérisé en ce qu'**il comprend une étape de modification de ladite signalisation associée audit flux numérique d'origine (A), modifiant au moins une table appartenant au groupe comprenant :
- les tables de description de services,
- les tables de correspondance de programmes,
- les tables d'allocation de programmes.

6. Procédé d'insertion selon la revendication 5, **caractérisé en ce que** ladite étape de modification de la signalisation modifie une table de correspondance de programmes dudit flux numérique d'origine (A), en mettant en oeuvre :
- une étape de remplacement d'un premier identifiant de paquets, permettant d'identifier au moins certains desdits paquets dudit flux numérique d'origine (A), par un deuxième identifiant de paquets, permettant d'identifier au moins un paquet portant une desdites composantes (C) à insérer,
- une étape d'incrémentation d'un numéro de version.

7. Procédé d'insertion selon l'une quelconque des revendications 5 et 6, **caractérisé en ce que** ladite étape de modification de la signalisation modifie une table d'allocation de programmes dudit flux numérique d'origine (A) en y insérant une déclaration d'au moins une nouvelle composante.

8. Procédé d'insertion l'une quelconque des revendications 1 à 7, **caractérisé en ce que** ladite étape d'insertion comprend une étape de sécurisation de la synchronisation de l'insertion, permettant de s'affranchir d'une différence de synchronisation entre lesdites informations de référence horodatées (I₂) associées à chacun desdits émetteurs dudit sous-ensemble, ladite étape de sécurisation mettant en oeuvre une des techniques appartenant au groupe comprenant :
- une sécurisation avec hystérésis,
- une sécurisation avec insertion différée de ladite composante (C) à insérer par rapport auxdites informations de référence horodatées (I₂).

9. Procédé d'insertion selon l'une quelconque des revendications 1 à 8, **caractérisé en ce que** ladite étape de construction dudit fichier à insérer tient également compte d'au moins une information de signalisation associée à la ou auxdites composantes (C) à insérer.

10. Procédé d'insertion selon l'une quelconque des revendications 1 à 9, **caractérisé en ce que** la ou lesdites composantes (C) à insérer dudit fichier à insérer sont découpées en tenant compte d'au moins un élément dudit fichier de description appartenant au groupe comprenant :
- une précision temporelle d'insertion désirée,
- un débit souhaité associé à la ou auxdites composantes (C) à insérer,
- une bande passante disponible associée audit flux numérique d'origine (A).

11. Dispositif d'insertion d'au moins une composante (C) dans un flux numérique d'origine (A) organisé en paquets successifs, destiné à fournir un flux modifié (B) devant être diffusé par un sous-ensemble d'au moins un émetteur d'un réseau de diffusion (11) comprenant au moins deux émetteurs distincts (E11₁, E11₂) utilisant une même fréquence d'émission,
**caractérisé en ce qu'**il met en oeuvre :
- des moyens de construction d'au moins un fichier à insérer comprenant au moins une composante à insérer, et d'au moins un fichier de description d'insertion comprenant au moins une information d'horodatage (I₁) de la ou desdites composantes à insérer, ladite information d'horodatage (I₁) définissant l'instant d'insertion et/ou le cycle d'émission de cette composante dans le flux numérique d'origine,
- des moyens d'insertion synchrone dans ledit flux numérique d'origine (A), par lesdits émetteurs dudit sous-ensemble, de la ou desdites composantes à insérer dudit fichier à insérer, ledit moyen d'insertion synchrone initialisant un compteur temporel (31) à partir de la détection de ladite au moins une information de référence, ladite information de référence étant du type information de programme ou information de service issue d'une signalisation associée audit flux numérique d'origine (A), et horodatant ladite information de référence à partir dudit compteur temporel (31), l'insertion de la ou desdites composantes à insérer s'effectuant au moment de la corrélation de ladite information de référence horodatée (I₂) et de ladite information d'horodatage (I₁) dudit fichier de description.

12. Produit programme d'ordinateur comprenant des instructions qui, lorsque le programme est exécuté par un dispositif d'insertion, conduisent celui-ci à mettre en oeuvre la méthode selon les revendications 1 à 10.

## Patentansprüche

1. Verfahren zum Einfügen mindestens einer Komponente (C) in einen digitalen Ausgangsstrom (A), der in aufeinanderfolgenden Paketen organisiert ist, das dazu bestimmt ist, einen modifizierten Strom (B) bereitzustellen, der durch eine Untereinheit von mindestens einem Sender eines Verbreitungsnetzes (11), das mindestens zwei verschiedene Sender (E11₁, E11₂) aufweist, die eine gleiche Sendefrequenz verwenden, verbreitet werden muss,
**dadurch gekennzeichnet, dass** es Folgendes aufweist:
- einen Schritt des Erstellens von mindestens einer einzufügenden Datei, die mindestens eine einzufügende Komponente aufweist, und von mindestens einer Beschreibungsdatei der Einfügung, die mindestens eine Zeitstempelinformation (I₁) der einzufügenden Komponente oder Komponenten aufweist, wobei die Zeitstempelinformation (I₁) den Einführungszeitpunkt und/oder den Sendezyklus dieser Komponente in den digitalen Ausgangsstrom definiert,
- einen Schritt des synchronen Einfügens in den digitalen Ausgangsstrom (A) durch die Sender der Untereinheit der einzufügenden Komponente oder Komponenten der einzufügenden Datei, wobei der Schritt des synchronen Einfügens Folgendes aufweist:
- ein Initialisieren eines Zeitzählers (31) ausgehend von dem Erfassen der mindestens einen Referenzinformation, wobei die Referenzinformation vom Typ der Programminformation oder Serviceinformation ist, die aus einer Signalisierung hervorgegangen ist, die mit dem digitalen Ausgangsstrom verbunden ist,
- ein Zeitstempeln der Referenzinformation ausgehend von dem Zeitzähler (31),
- ein Einfügen der einzufügenden Komponente oder Komponenten zum Zeitpunkt der Korrelation zwischen der zeitgestempelten Referenzinformation (I₂) und der Zeitstempelinformation (I₁) der Beschreibungsdatei.

2. Verfahren zum Einfügen nach Anspruch 1, **dadurch gekennzeichnet, dass** die mindestens eine Referenzinformation einer Tabelle entspricht, die zu der Gruppe gehört, umfassend:
- die Tabellen des Datums und der Uhrzeit,
- die Tabellen der Zeitabweichung,
- die Tabellen der Programmallokation,
- die Tabellen der Programmübereinstimmung.

3. Verfahren zum Einfügen nach einem der Ansprüche 1 oder 2, **dadurch gekennzeichnet, dass** mindestens eine der Komponenten an die Stelle von mindestens einem Füllpaket des digitalen Ausgangsstrom (A) eingefügt wird.

4. Verfahren zum Einfügen nach einem der Ansprüche 1 bis 3, **dadurch gekennzeichnet, dass** mindestens eine der Komponenten an die Stelle von mindestens einer bestehenden Komponente (C) des digitalen Ausgangsstrom (A) eingefügt wird.

5. Verfahren zum Einfügen nach einem der Ansprüche 1 bis 4, **dadurch gekennzeichnet, dass** es einen Schritt des Modifizierens der Signalisierung, die mit dem digitalen Ausgangsstrom (A) verbunden ist, aufweist, der mindestens eine Tabelle modifiziert, die zu der Gruppe gehört, umfassend:
- die Tabellen der Servicebeschreibung,
- die Tabellen der Programmübereinstimmung,
- die Tabellen der Programmallokation.

6. Verfahren zum Einfügen nach Anspruch 5, **dadurch gekennzeichnet, dass** der Schritt des Modifizierens der Signalisierung eine Tabelle der Programmübereinstimmung des digitalen Ausgangsstroms (A) modifiziert, indem Folgendes umgesetzt wird:
- ein Schritt des Ersetzens einer ersten Paketkennung, die ermöglicht, mindestens bestimmte der Pakete des digitalen Ausgangsstroms (A) zu identifizieren, durch eine zweite Paketkennung, die ermöglicht, mindestens ein Paket zu identifizieren, das eine der einzufügenden Komponenten (C) trägt,
- ein Schritt des Erhöhens einer Versionsnummer.

7. Verfahren zum Einfügen nach einem der Ansprüche 5 und 6, **dadurch gekennzeichnet, dass** der Schritt des Modifizierens der Signalisierung eine Tabelle der Programmallokation des digitalen Ausgangsstroms (A) modifiziert, indem er darin eine Deklaration einer Komponente einfügt.

8. Verfahren zum Einfügen nach einem der Ansprüche 1 bis 7, **dadurch gekennzeichnet, dass** der Schritt des Einfügens einen Schritt des Sicherns der Synchronisation des Einfügens aufweist, der ermöglicht, sich von einer Synchronisationsdifferenz zwischen den zeitgestempelten Referenzinformationen (I₂) zu befreien, die mit jedem der Sender der Untereinheit verbunden sind, wobei der Schritt des Sicherns eine der Techniken umsetzt, die zu der Gruppe gehören, umfassend:
- ein Sichern mit Hysterese,
- ein Sichern mit zeitversetztem Einfügen der einzufügenden Komponente (C) gegenüber den zeitgestempelten Referenzinformationen (I₂).

9. Verfahren zum Einfügen nach einem der Ansprüche 1 bis 8, **dadurch gekennzeichnet, dass** der Schritt des Erstellens der einzufügenden Datei auch mindestens eine Signalisierungsinformation berücksichtigt, die mit der oder den einzufügenden Komponenten (C) verbunden ist.

10. Verfahren zum Einfügen nach einem der Ansprüche 1 bis 9, **dadurch gekennzeichnet, dass** die einzufügende Komponente oder einzufügenden Komponenten (C) der einzufügenden Datei zerschnitten werden, indem mindestens ein Element der Beschreibungsdatei berücksichtigt wird, das zu der Gruppe gehört, umfassend:
- eine gewünschte zeitliche Genauigkeit zum Einfügen,
- einen gewünschten Durchsatz, der mit der oder den einzufügenden Komponenten (C) verbunden ist,
- eine verfügbare Bandbreite, die mit dem digitalen Ausgangsstrom (A) verbunden ist.

11. Vorrichtung zum Einfügen mindestens einer Komponente (C) in einen digitalen Ausgangsstrom (A), der in aufeinanderfolgenden Paketen organisiert ist, die dazu bestimmt ist, einen modifizierten Strom (B) bereitzustellen, der durch eine Untereinheit von mindestens einem Sender eines Verbreitungsnetzes (11), das mindestens zwei verschiedene Sender (E11₁, E11₂) aufweist, die eine gleiche Sendefrequenz verwenden, verbreitet werden muss,
**dadurch gekennzeichnet, dass** sie Folgendes einsetzt:
- Mittel zum Erstellen von mindestens einer einzufügenden Datei, die mindestens eine einzufügende Komponente aufweist, und von mindestens einer Beschreibungsdatei der Einfügung, die mindestens eine Zeitstempelinformation (I₁) der einzufügenden Komponente oder Komponenten aufweist, wobei die Zeitstempelinformation (I₁) den Einführungszeitpunkt und/oder den Sendezyklus dieser Komponente in den digitalen Ausgangsstrom definiert,
- Mittel zum synchronen Einfügen in den digitalen Ausgangsstrom (A) durch die Sender der Untereinheit der einzufügenden Komponente oder Komponenten der einzufügenden Datei, wobei das Mittel zum synchronen Einfügen einen Zeitzähler (31) ausgehend von dem Erfassen der mindestens einen Referenzinformation initialisiert, wobei die Referenzinformation vom Typ der Programminformation oder Serviceinformation ist, die aus einer Signalisierung hervorgegangen ist, die mit dem digitalen Ausgangsstrom (A) verbunden ist, und die Referenzinformation ausgehend von dem Zeitzähler (31) zeitstempelt, wobei das Einfügen der einzufügenden Komponente oder Komponenten zum Zeitpunkt der Korrelation zwischen der zeitgestempelten Referenzinformation (I₂) und der Zeitstempelinformation (I₁) der Beschreibungsdatei durchgeführt wird.

12. Computerprogrammprodukt, umfassend Anleitungen, die, wenn das Programm von einer Einfügevorrichtung ausgeführt wird, diese dazu bringen, das Verfahren nach den Ansprüchen 1 bis 10 umzusetzen.

## Claims

1. A method of inserting at least one component (C) into an original data stream (A), organised in successive packets, which is intended to provide a modified stream (B) to be broadcast by a subassembly of at least one transmitter of a broadcasting network (11) comprising at least two distinct transmitters (E11₁, E11₂) using one and the same transmission frequency **characterised in that** it comprises:
- a step of constructing at least one file to be inserted comprising at least one component to be inserted, and at least one insertion description file comprising at least one time stamping cue (I₁) for said component or components to be inserted, said time stamping cue (I₁) defining the instant of insertion and/or the transmission cycle of this component in the original data stream,
- a step of synchronously inserting into said original digital stream (A), by said transmitters of said subassembly, the component or components to be inserted of said file to be inserted, the synchronous insertion step comprising:
- initialisation of a time counter (31) from when said at least one piece of reference information is detected, said reference information being of the program information or service information type issued from a signalling associated with said original digital stream;
- time stamping of said reference information by said time counter (31);
- insertion of the component or components to be inserted at the moment of correlation of said time-stamped reference information (I₂) and said time stamping cue (I₁) of said description file.

2. The method of insertion according to Claim 1, **characterised in that** said at least one piece of reference information corresponds to a table belonging to the group comprising:
- date and time tables;
- time shift tables;
- program allocation tables;
- program correspondence tables.

3. The method of insertion according to either of Claims 1 or 2, **characterised in that** at least one of said components is inserted in place of at least one stuffing packet of said original data stream (A).

4. The method of insertion according to any one of Claims 1 to 3, **characterised in that** at least one of said components is inserted in place of at least one existing component (C) of the original data stream (A).

5. The method of insertion according to any one of Claims 1 to 4, **characterised in that** it comprises a step of modifying said signalling associated with the original data stream (A), by modifying at least one table belonging to the group comprising:
- service description tables;
- program correspondence tables;
- program allocation tables.

6. The method of insertion according to Claim 5, **characterised in that** said signalling modification step modifies a programs correspondence table of said original digital stream (A), by implementing :
- a step of replacing a first packet identifier, allowing identification of at least some of said packets of the original data stream (A), by a second packet identifier, allowing to escape from identification of at least one packet containing said components (C) to be inserted;
- a step of incrementing a version number.

7. The method of insertion according to either of Claims 5 or 6, **characterised in that** said signalling modification step modifies a programs allocation table of said original digital flow (A) by inserting a declaration of at least one new component.

8. The method of insertion according to any one of Claims 1 to 7, **characterised in that** said insertion step comprises a step of protecting the synchronisation of the insertion, allowing a difference in synchronisation between said time-stamped reference information (I₂) associated with each of said transmitters of said subassembly, to be overcome, said protection step implementing one of the techniques belonging to the group:
- protection with hysteresis;
- protection with deferred insertion of said component (C) to be inserted in relation to said time-stamped reference information (I₂).

9. The method of insertion according to any one of Claims 1 to 8, **characterised in that** said construction step of said file to be inserted also takes account of at least one piece of signalling information associated with the component or components (C) to be inserted.

10. The method of insertion according to any one of Claims 1 to 9, **characterised in that** said component or components (C) to be inserted of said file to be inserted are sliced taking into account at least one element of said description file belonging to the group comprising:
- a desired insertion timing accuracy;
- a desired rate associated with said component or components (C) to be inserted;
- an available pass band associated with said original data stream (A).

11. A device for inserting at least one component (C) into an original data stream (A), organised in successive packets, which is intended to provide a modified stream (B) to be broadcast by a subassembly of at least one transmitter of a broadcasting network (11) comprising at least two distinct transmitters (E11₁, E11₂) using one and the same transmission frequency, **characterised in that** it implements:
- means of constructing at least one file to be inserted comprising at least one component to be inserted, and at least one insertion description file comprising at least one time stamping cue (I₁) for said component or components to be inserted, said time stamping cue (I₁) defining the instant of insertion and/or the transmission cycle of this component in the original data stream;
- means of synchronously inserting into said original digital stream (A), by said transmitters of said subassembly, the component or components to be inserted of said file to be inserted, said synchronous insertion means initialising a time counter (31) from when said at least one piece of reference information is detected, said reference information being of the program information or service information type issued from a signalling associated with said original digital stream (A), and time stamping of said reference information by said time counter (31), insertion of the component or components to be inserted taking place at the moment of correlation of said time-stamped reference information (I₂) and said time stamping cue (I₁) of said description file.

12. A computer program product comprising instructions which, when the program is executed by an insertion device, lead this to implement the method according to Claims 1 to 10.
